# EUROPÄISCHE PATENTSCHRIFT

(11) **EP 3 590 746 B1**
(45) Veröffentlichungstag und Bekanntmachung des Hinweises auf die Patenterteilung: **07.04.2021**
(21) Anmeldenummer: 19179994.9
(22) Anmeldetag: 13.06.2019
(51) Int. Cl.: B60J 5/04, B60J 5/10, B29C 45/60

(54) **VERFAHREN ZUR HERSTELLUNG EINER FAHRZEUGTÜR BZW. -KLAPPE MIT TRAGSTRUKTUR**
METHOD FOR PRODUCING A VEHICLE DOOR OR FLAP WITH SUPPORT STRUCTURE
PROCÉDÉ DE FABRICATION D'UNE PORTE OU D'UN HAYON DE VÉHICULE POURVU DE STRUCTURE PORTANTE

(30) Priorität: 04.07.2018 DE 102018211064
(43) Veröffentlichungstag der Anmeldung: 08.01.2020
(73) Patentinhaber: Magna Exteriors (Bohemia) s.r.o., 460 06 Liberec (CZ)
(72) Erfinder: JEDINÁK, Petr, 460 06 Liberec 6 (CZ); MODRÁK, Miroslav, 460 06 Liberec 6 (CZ); PUTA, Josef, 46804 Jablonec nad Nisou (CZ)
(74) Vertreter: Rausch, Gabriele

(56) Entgegenhaltungen:
- EP-A1- 1 120 305
- WO-A1-2017/220903
- DE-A1-102005 011 076
- JP-A- 2010 500 198

## Beschreibung

Die Erfindung betrifft ein Verfahren zur Herstellung einer Fahrzeugtür bzw. - klappe, insbesondere für Kraftfahrzeuge, mit einem als Tragstruktur der Tür bzw. Klappe ausgebildeten, von einer Außen- und/oder Innenverkleidung gesonderten Rahmen.

### Stand der Technik

Gerade auch für verstärkende Bauteile im Fahrzeugbau kommen heute Kunststoffe und/oder Verbundwerkstoffe zum Einsatz, die für den Leichtbau unentbehrlich sind.

So werden auch größerer Rahmen für Fahrzeugklappen und Fahrzeugtüren aus diesen Kunststoffen hergestellt.

Aus der unveröffentlichten DE10 2018 205 733 ist beispielhaft ein Verfahren zur Herstellung eines verstärkenden Bauteils aus unterschiedlichen Materialien bekannt, wobei in einem ersten Schritt das Bauteil in einem ersten Werkzeug durch Reaktions-Spritzgießen mit Verschäumen des verwendeten Kunststoff-Materials und durch Reduktion großer Querschnitte des Bauteils durch Einlegeteile aus demselben Kunststoff-Material hergestellt wird, wobei in einem zweiten Schritt das Bauteil mit mindestens einem Fasertyp umwickelt wird und wobei das Bauteil im dritten Verfahrensschritt gesamt in einem zweiten Werkzeug mit Kunststoff eines zweiten Kunststoff-Materials umspritzt, bzw. konsolidiert/ durchgedrungen wird.

Ein Problem bei der Herstellung dieser großformatigen Rahmen ist es, dass man dazu auch sehr große Spritzgusswerkzeuge benötigt.

Aus der DE 102 00 516 A1 ist bekannt, für äußerlich unterschiedliche Fahrzeugtüren bzw. -klappen gleiche bzw. hinsichtlich wesentlicher Module gleiche Rahmen vorzusehen und die An- bzw. Einbauteile der Tür oder Klappe unmittelbar am Rahmen anzuordnen. Damit dient der Rahmen einerseits als Tragstruktur der Tür bzw. Klappe und andererseits als Aggregateträger, welcher mit den zugehörigen Aggregaten und Beschlägen vorgefertigt werden kann, ohne damit bereits die Form oder Baureihe der Tür oder Klappe endgültig festzulegen.

Aus der DE 10 2005 0110 76 A1 ist einen Fahrzeugtür bekannt, die aus einzelnen Komponenten zusammensetzbar ist, wobei das Ziel ist die Komponenten unterschiedlich ausgestalten zu können. Die Komponenten bestehen dabei aus Blechstanzteilen. Diese Blechstanzbauteile werden mit Kunststoff umspritzt, um Verbindungsmittel zu erzeugen.

Aus der US 6 010 182 B1 ist ein Rahmen für ein Fahrzeug bekannt, der an unterschiedlichen Einsatzstellen am Fahrzeug verwendet wird. Die Rahmenteile bestehen dabei aus Metall oder aus Kunststoffmaterial. Die einzelnen Rahmenteile werden über Knoten-Bauteile miteinander verbunden.

Die EP 1 680 295 B1 zeigt den Rahmen für ein Fahrzeug, wobei Rahmenbauteile mit einem oberen Abschluss-Bauteil verbunden werden, in dem metallische Verstärkungsecken 52 verwendet werden.

Aus der EP 1 120 305 A1 ist eine Fahrzeugtür bekannt, bei der ein thermoplastischer Werkstoff als starres, geschlossenes Profil mit einem Querschnitt in Form eines Hohlkörpers hergestellt wird. Das Material besteht in der verwendeten Form aus zwei getrennten Längsteilen (2a, 2b), die getrennt durch Formgebung oder Extrusion hergestellt und durch Einklipsen und Verkleben zum Hohlprofil zusammengefügt werden.

Des Weiteren können die Verbinder, welche zwischen zwei etwa geradlinig aneinander anschließenden Rahmenteilen und/oder als Verbindungsknoten zwischen mehr als zwei Rahmenteilen angeordnet sein können, zumindest teilweise als Befestigungsflansche für Einbauteile, insbesondere Fensterheber, Fensterführungen od. dgl., ausgebildet sein.

Hinsichtlich einer kostengünstigen Herstellung ist es besonders vorteilhaft, die Verbinder durch Eingießen der Profilteile bzw. -zuschnitte zu erzeugen. Damit genügt ein einziger Gießvorgang, um einerseits die Verbinder herzustellen und andererseits die den Rahmen bildenden Profilteile bzw. -zuschnitte miteinander zu verbinden.

Nachteilig ist dabei, dass die Verbinder Eckverbinder sind und die Rahmenteile daher immer noch sehr lang sein können.

Es ist Aufgabe der Erfindung ein Verfahren zur Herstellung einer Fahrzeugtür bzw. -klappe, insbesondere für Kraftfahrzeuge, vorzuschlagen, mit einem als Tragstruktur der Tür bzw. Klappe ausgebildeten, von einer Außen- und/oder Innenverkleidung gesonderten Rahmen, wobei der Rahmen aus Einzelelementen zusammengesetzt hergestellt ist.

### Beschreibung der Erfindung

Die Aufgabe wird gelöst mit einem Verfahren zur Herstellung einer Fahrzeugtür bzw. -klappe, insbesondere für Kraftfahrzeuge, mit einem als Tragstruktur der Tür bzw. Klappe ausgebildeten, von einer Außen- und/oder Innenverkleidung gesonderten Rahmen, wobei der Rahmen aus Kunststoff und/oder einem Verbundmaterial hergestellt ist, wobei der Rahmen aus mindestens zwei Bauteilen besteht, die miteinander verbunden sind, wobei die mindestens zwei Bauteile Verbindungsmittel aufweisen, die aus Nut-Feder-Verbindungen bestehen, wobei ein Rahmen mindestens in zwei Teilen in einem gemeinsamen Spitzgusswerkzeug gespritzt wird, die Rahmenteile entnommen werden und die Rahmenteile auf dieselbe Temperatur gebracht und die angespritzten Nut-Feder-Verbindungen in Eingriff gebracht werden.

Ein solcher mehrteiliger Rahmen ist mit den Nut-Feder-Verbindungen so optimiert, dass er den Anforderungen als Aussteifungselement genügt.

Vorzugsweise wird die Stückelung so gewählt, dass die Bauteile ineinander verschachtelt herstellbar sind. Dadurch kann die Größe des Spitzguss-Werkzeugs verringert werden.

Es ist von Vorteil, dass die Nut-Feder-Verbindungen in einer Richtung senkrecht zu der Ebene des aufgespannten Rahmens ineinander einschiebbar sind, was die Montage vereinfacht.

Für eine optimale Verbindung, die auch Zugkräfte entlang der Längserstreckungen der Rahmenteile aushält, weisen die Verbindungsmittel mindesten einen Hinterschnitt auf.

Die Verbindungsmittel sind mit zylinderförmigen oder T-förmigen oder kegelförmigen Nasen und entsprechenden Aufnahmen ausgestattet.

In einem alternativen Verfahren zur Herstellung einer Fahrzeugtür bzw. -klappe wird ein Rahmen mindestens in zwei Teilen in einem gemeinsamen Spitzgusswerkzeug gespritzt, die Rahmenteile werden entnommen, und die Rahmenteile werden auf unterschiedliche Temperaturen gebracht und die angespritzten Nut-Feder-Verbindungen in Eingriff und beim Abkühlen werden die Verbindungsmittel durch Schrumpfen eines der Bauteile verstärkt in Eingriff gebracht.

### Beschreibung der Ausführungsbeispiele

Die Erfindung wird nachfolgend beispielhaft unter Bezugnahme auf die beigefügte Zeichnung beschrieben.
Fig. 1 zeigt eine schematische Darstellung einer beispielhaften Ausführungsform einer Heckklappe im Stand der Technik,
Fig. 2 zeigt einen beispielhaften Rahmen mit Verbinderbeispielen
Fig. 3 zeigt ein Kunststoffspitzgusswerkzeug,
Figur 4 zeigt ein Verbindungsbeispiel.

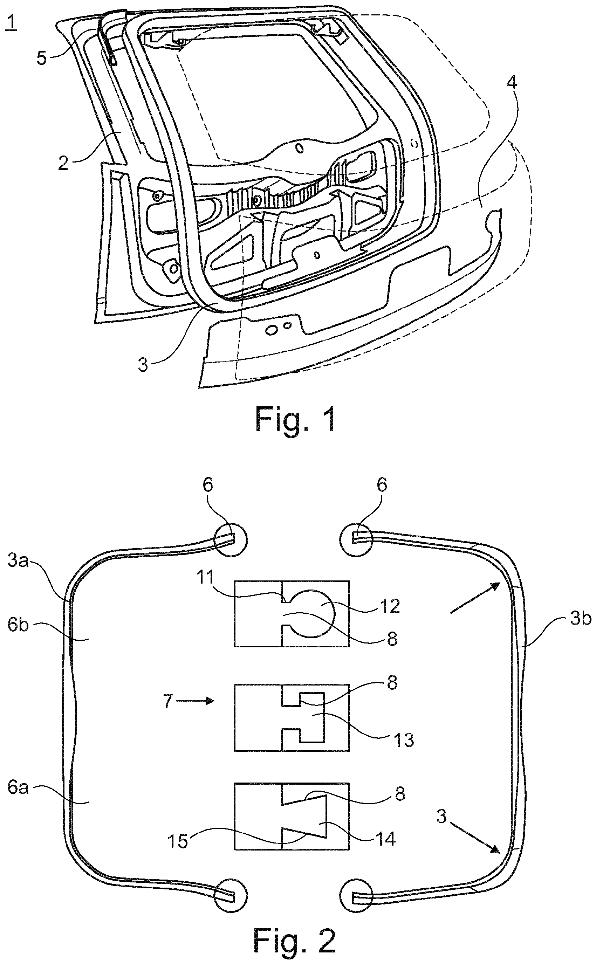

In Figur 1 sind die Hauptbestandteile einer Heckklappe 1 dargestellt. Als Basis der Heckklappe dient ein Trägerteil 2, dass aus faserverstärkten Kunststoffen hergestellt ist. Der versteifende Rahmen 3 ist eine geschlossene Form oder auch eine nichtgeschlossene, beliebige Form aus einem Polyurethan-Material oder andere Verbundmaterialien wie Epoxy, Vinyl-Ester und andere Kunststoffmaterialen. Die Verkleidungsteile 4 werden mit dem Trägerteil 2 verbunden. Zur Versteifung der Heckklappe sind Versteifungselemente 5 vorgesehen, die in diesem Ausführungsbeispiel aus Metall hergestellt sind. Sie werden getrennt mit dem Trägerteil 2 verbunden.

In Figur 2 ist der Rahmen beispielhaft aus zwei Rahmenteilen 3a und 3b hergestellt und an den Kontaktstellen 6 jeweils miteinander verbunden, um eine geschlossene Form zu erhalten.

An den Kontaktstellen 6 sind jeweils Verbindungsmittel 7 angebracht. In der Figur 2 sind beispielhaft 3 Ausführungsformen eines möglichen Verbindungsmittels 7 dargestellt.

Dabei handelt es sich um Nut-Feder-Verbindungen, dargestellt in der von den Rahmenteilen 3a und 3b aufgespannten Ebene.

Die Nut-Feder-Verbindungen weisen dabei mindestens einen Hinterschnitt 8 auf, so dass die Verbindung nur durch das Einpressen in einer Richtung, nämlich im Ausführungsbeispiel senkrecht zu der vom Rahmen auf gespannter Ebene erfolgen kann.

Als Hinterschnitt werden beim Entformen der Werkzeugform störende Elemente bezeichnet. Weil diese Elemente bei einer einfachen Entformung in eine Bewegungsrichtung praktisch im Weg stehen, muss in einer weiteren Entformungsrichtung freigestellt bzw. entformt werden. Diese Hinterschnitte dienen aber zur Ausgestaltung von Verbindungsmittel, die eine einfache Trennung zumindest in einer Richtung verhindern.

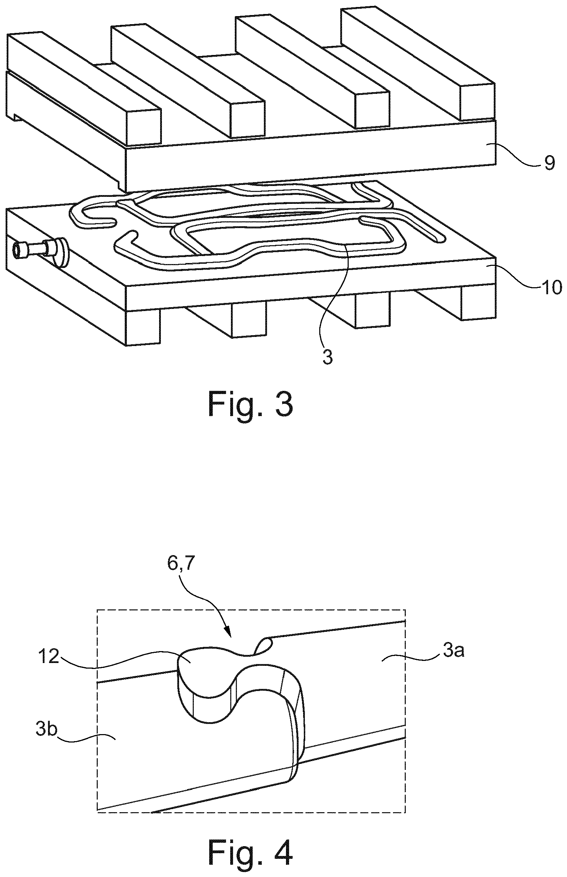

Das lässt sich auch in der dreidimensionalen Darstellung der Figur 4 erkennen. Die Nut-Feder-Verbindung wird durch ein formschlüssiges und/oder kraftschlüssiges Einpressen des Rahmenteils 3a mit Feder in das Rahmenteil 3b mit Nut hergestellt.

Es ist dabei wichtig, dass die Verbindungsmittel 7 so exakt zueinander passen, dass die Kontaktstellen keine Schwächung der Rahmenstruktur darstellen.

In der obersten Variante der Figur 2 des Verbindungsmittels 7 ist eine zylinderförmige Nase 12 im linken Rahmenteil 3a ausgebildet, die über eine Einschnürung 11 mit dem Bauteil 3a verbunden ist.

Dadurch entsteht eine schlüssellochartige Form der Ausnehmung auf der Seite des Rahmenteils 3a.

In der mittleren Ausführungsform der Figur 2 weist das Verbindungsmittel 7 eine T-förmige Auskragung auf, bei der das stumpfe Ende 13 der T-förmigen Auskragung den Hinterschnitt des Verbindungsmittels 7 bildet.

In der untersten Ausführungsform der Figur 2 bildet das Rahmenteil 3a des Rahmens 3 eine sich konisch erweiternde Nase 14 aus, deren Seitenflächen 15 den Hinterschnitt 8 in dieser Ausführungsform bilden.

Die Herstellung der Rahmen 3 nur mit zwei Bausteinen wäre noch kein großer Gewinn für die Platzreduzierung in der Kunststoffspritzgussform, aber schon eine erste Optimierungsstufe.

Ein wie in Figur 2 dargestellter Rahmen 3 könnte aber an weiteren Kontaktstellen 6a, 6b unterbrochen sein und über die Nut-Federverbindungen ineinandergesteckt werden.

Dadurch werden die einzelnen Rahmenteile des Rahmens 3 in ihrer Größe deutlich reduziert und können ineinander verschachtelt in einem wesentlich kleineren Kunststoffspritzguss-Werkzeug hergestellt werden.

Nach dem Spritzguss-Vorgang werden die einzelnen Rahmenteil des Rahmens 3 entnommen und zu einem geschlossenen oder offenen Verstärkungsrahmen zusam mengebaut.

Dabei sollten die Verbindungsmittel 7 in einer ersten Ausführungsform dieselbe Temperatur aufweisen, wenn sie miteinander in Verbindung gebracht werden. Es geht dabei darum, mögliche Probleme bei Schrumpfung des Kunststoffs während des Abkühlens zu vermeiden.

Allerdings könnte man sich die Wärmeausdehnung des Kunststoffs auch zum Vorteil nutzen, indem das Rahmenteil 3b mit der Nut so ausgestaltet ist, dass die Aufnahme der Feder im warmen Zustand des Rahmenteils 3b erfolgt, während das Rahmenteil 3a schon erkaltet ist und die Nut um die Federstruktur herum schrumpft, wenn das Rahmenteil 3b erkaltet.

In Figur 3 ist schematisch ein Kunststoffspritzguss-Werkzeug mit einem oberen Werkzeug 9 und einem unteren Werkzeug 10 dargestellt. Es kann sich auch um ein Reaktionsspritzguss-Werkzeug handeln. Die einzelnen Komponenten des Rahmens 3, liegen ineinander verschachtelt zueinander und werden über einen Spritzgussvorgang zusammen hergestellt.

Eine spezielle Ausführungsform stellt die Herstellung einer rahmenartigen Struktur, wie sie in der DE102018205733 beschrieben wird, dar. Der Herstellungsprozess des Rahmens 3 erfolgt dabei in drei maßgeblichen Verfahrensschritten. Im Schritt S1 wird ein Kern aus PU- Schaum oder andere Kunststoffmaterialen hergestellt, wobei man eine steife Form erhält. Der Rahmen 3 wird dabei als einzelne Komponenten 3a, 3b in einem Werkzeug 9, 10 gespritzt und geschäumt.

In einem weiteren Verfahrensschritt werden die hergestellte Rahmenteile 3a, 3b miteinander verbunden und anschließend mit Glasfasern, Karbonfasern oder andere Fasern in einem Endlosprozess mit einer Wickelmaschine umwickelt. Anschließend wird der mit den Fasern umwickelte Rahmen 3 mit PU-Material in einem weiteren Werkzeug in einem letzten Verfahrensschritt mit Kompositmaterial, wie Epoxy, Vinyl-Ester oder andere Kunststoffmaterialen, konsolidiert und/oder durchgedrungen. Dabei kann dasselbe Kunststoffmaterial wie im ersten Verfahrensschritt oder auch ein anderes Kunststoffmaterial verwendet werden.

Bei diesem Ausführungsbeispiel sind auch Einlageteile, wie in der Anmeldung DE102018205733 beschrieben, sinnvoll, um große Querschnitte nicht komplett in einem Herstellungsschritt schäumen und vor allem aushärten zu müssen.

### Bezugszeichenliste

1 Bauteil
2 Trägerteil
3 Rahmen
3a, 3b Rahmenteile
4 Verkleidungsteil
5 Verstärkungsteil
6 Kontaktstellen
6a, 6b Kontaktstellen
7 Verbindungsmittel
8 Hinterschnitt
9 oberes Werkzeug
10 unteres Werkzeug
11 Einschnürung
12 zylinderförmige Nase
13 stumpfes Ende
14 konische erweiterte Nase
15 Seitenflächen

## Patentansprüche

1. Verfahren zur Herstellung einer Fahrzeugtür bzw. -klappe (1) für Kraftfahrzeuge mit einem als Tragstruktur der Tür bzw. Klappe ausgebildeten, von einer Außen- und/oder Innenverkleidung gesonderten Rahmen (3), wobei der Rahmen (3) aus Kunststoff und/oder einem Verbundmaterial wie Epoxy, Vinyl-Ester und andere Kunststoffmaterialen hergestellt ist, und der Rahmen (3) aus mindestens zwei Rahmenteilen (3a, 3b) besteht, die an Kontaktstellen (6) miteinander verbunden sind, wobei die mindestens zwei Rahmenteile (3a, 3b) an den Kontaktstellen (6) jeweils Verbindungsmittel (7) aufweisen, die aus Nut-Feder-Verbindungen in der von den Rahmenteilen (3a und 3b) aufgespannten Ebene bestehen,
**dadurch gekennzeichnet, dass** ein Rahmen (3) mindestens in zwei Rahmenteilen (3a, 3b) in einem gemeinsamen Spitzgusswerkzeug gespritzt wird,
die Rahmenteile (3a, 3b) entnommen werden,
und die Rahmenteile (3a, 3b) auf dieselbe Temperatur gebracht werden und die angespritzten Nut-Feder-Verbindungen in Eingriff gebracht werden.

2. Verfahren zur Herstellung einer Fahrzeugtür bzw. -klappe (1) für Kraftfahrzeuge mit einem als Tragstruktur der Tür bzw. Klappe ausgebildeten, von einer Außen- und/oder Innenverkleidung gesonderten Rahmen (3), wobei der Rahmen (3) aus Kunststoff und/oder einem Verbundmaterial wie Epoxy, Vinyl-Ester und andere Kunststoffmaterialen hergestellt ist, und der Rahmen (3) aus mindestens zwei Rahmenteilen (3a, 3b) besteht, die an Kontaktstellen (6) miteinander verbunden sind, wobei die mindestens zwei Rahmenteile (3a, 3b) an den Kontaktstellen (6) jeweils Verbindungsmittel (7) aufweisen, die aus Nut-Feder-Verbindungen in der von den Rahmenteilen (3a und 3b) aufgespannten Ebene bestehen **dadurch gekennzeichnet, dass** ein Rahmen (3) mindestens in zwei Rahmenteilen (3a, 3b) in einem gemeinsamen Spitzgusswerkzeug gespritzt wird,
die Rahmenteile (3a, 3b) entnommen werden,
und die Rahmenteile (3a, 3b) auf unterschiedliche Temperaturen gebracht werden und die angespritzten Nut-Feder-Verbindungen in Eingriff gebracht werden,
und beim Abkühlen die Verbindungsmittel (7) durch Schrumpfen verstärkt in Eingriff gebracht werden.

3. Verfahren zur Herstellung einer Fahrzeugtür bzw. -klappe nach Anspruch 1 oder 2,
**dadurch gekennzeichnet, dass** ein Rahmen (3) mindestens in zwei Rahmenteilen (3a, 3b) in einem gemeinsamen Spitzgusswerkzeug aus geschäumtem Material hergestellt wird,
die Rahmenteile (3a, 3b) entnommen und zusammengesetzt werden,
der Rahmen mit Glasfasern, Karbonfasern oder andere Fasern in einem Endlosprozess mit einer Wickelmaschine umwickelt wird und
der mit Fasern umwickelte Rahmen (3) mit Kunststoff und/oder Kompositmaterial zur endgültigen Rahmenform konsolidiert und/oder durchgedrungen wird.

4. Verfahren zur Herstellung einer Fahrzeugtür bzw. -klappe (1) für Kraftfahrzeuge nach Anspruch 1 oder 2, wobei die Teilung der Rahmenteile (3a, 3b) so ist, dass die Rahmenteile (3a, 3b) ineinander verschachtelt in einem Werkzeug hergestellt sind.

5. Verfahren zur Herstellung einer Fahrzeugtür bzw. -klappe (1) für Kraftfahrzeuge nach Anspruch 1 oder 2, wobei die Nut-Feder-Verbindungen in einer Richtung senkrecht zu der Ebene des aufgespannten Rahmens (3) ineinander einschiebbar sind.

6. Verfahren zur Herstellung einer Fahrzeugtür bzw. -klappe (1) für Kraftfahrzeuge nach Anspruch 1 oder 2, wobei die Verbindungsmittel mindesten einen Hinterschnitt (8) aufweisen.

7. Verfahren zur Herstellung einer Fahrzeugtür bzw. -klappe (1) für Kraftfahrzeuge nach Anspruch 1 oder 2, wobei die Verbindungsmittel (7) mit zylinderförmigen oder T-förmigen oder kegelförmigen Nasen (12, 13,14) und entsprechenden Aufnahmen ausgestattet sind.

## Claims

1. Method for producing a vehicle door or flap (1) for motor vehicles, having a frame (3) which is in the form of a support structure of the door or flap and is separate from an exterior and/or interior trim, wherein the frame (3) is produced from plastic and/or a composite material such as epoxy, vinyl ester and other plastic materials, and the frame (3) consists of at least two frame parts (3a, 3b) which are connected to one another at contact points (6), wherein the at least two frame parts (3a, 3b) have in each case connecting means (7) at the contact points (6), which connecting means consist of tongue and groove connections in the plane spanned by the frame parts (3a and 3b),
**characterized in that** a frame (3) is injection moulded at least in two frame parts (3a, 3b) in a common injection mould,
the frame parts (3a, 3b) are removed,
and the frame parts (3a, 3b) are brought to the same temperature and the moulded-on tongue and groove connections are brought into engagement.

2. Method for producing a vehicle door or flap (1) for motor vehicles, having a frame (3) which is in the form of a support structure of the door or flap and is separate from an exterior and/or interior trim, wherein the frame (3) is produced from plastic and/or a composite material such as epoxy, vinyl ester and other plastic materials, and the frame (3) consists of at least two frame parts (3a, 3b) which are connected to one another at contact points (6), wherein the at least two frame parts (3a, 3b) have in each case connecting means (7) at the contact points (6), which connecting means consist of tongue and groove connections in the plane spanned by the frame parts (3a and 3b),
**characterized in that** a frame (3) is injection moulded at least in two frame parts (3a, 3b) in a common injection mould,
the frame parts (3a, 3b) are removed,
and the frame parts (3a, 3b) are brought to different temperatures and the moulded-on tongue and groove connections are brought into engagement,
and, during cooling, the connecting means (7) are brought into engagement in a strengthened manner by contraction.

3. Method for producing a vehicle door or flap according to Claim 1 or 2,
**characterized in that** a frame (3) is produced at least in two frame parts (3a, 3b) in a common injection mould from foamed material,
the frame parts (3a, 3b) are removed and assembled,
glass fibres, carbon fibres or other fibres are wound around the frame in a continuous process by a winding machine, and
the frame (3) wound around with fibres is consolidated and/or permeated with plastic and/or composite material to produce the final frame form.

4. Method for producing a vehicle door or flap (1) for motor vehicles according to Claim 1 or 2, wherein the division of the frame parts (3a, 3b) is such that the frame parts (3a, 3b) are produced nested in one another in a mould.

5. Method for producing a vehicle door or flap (1) for motor vehicles according to Claim 1 or 2, wherein the tongue and groove connections can be pushed into one another in a direction perpendicular to the plane of the spanned frame (3).

6. Method for producing a vehicle door or flap (1) for motor vehicles according to Claim 1 or 2, wherein the connecting means have at least one undercut (8).

7. Method for producing a vehicle door or flap (1) for motor vehicles according to Claim 1 or 2, wherein the connecting means (7) are equipped with cylindrical or T-shaped or conical lugs (12, 13, 14) and corresponding receptacles.

## Revendications

1. Procédé de fabrication d'une porte ou d'un volet (1) de véhicule destiné(e) à des véhicules automobiles et comprenant un cadre (3) conçu comme une structure porteuse de la porte ou du volet et séparé d'un habillage extérieur et/ou intérieur, le cadre (3) étant fabriqué à partir d'une matière synthétique et/ou d'un matériau composite tel que l'époxy, l'ester vinylique et d'autres matériaux à base de matières synthétiques, et le cadre (3) comprenant au moins deux parties de cadre (3a, 3b) qui sont reliées l'une à l'autre en des points de contact (6), les au moins deux parties de cadre (3a, 3b) comportant chacune aux points de contact (6) des moyens de liaison (7) qui se présentent sous forme de liaisons à languette et rainure dans le plan passant par les parties de cadre (3a et 3b),
**caractérisé en ce que**
un cadre (3) est moulé par injection au moins en deux parties de cadre (3a, 3b) dans un outil de moulage par injection commun,
les parties de cadre (3a, 3b) sont retirées,
et les parties de cadre (3a, 3b) sont portées à la même température et les liaisons à languette et rainure moulées par injection sont engagées les unes avec les autres.

2. Procédé de fabrication d'une porte ou d'un volet (1) de véhicule destiné(e) à des véhicules automobiles et comprenant un cadre (3) conçu comme une structure porteuse de la porte ou du volet et séparé d'un habillage extérieur et/ou intérieur,
le cadre (3) étant fabriqué à partir d'une matière synthétique et/ou d'un matériau composite tel que l'époxy, l'ester vinylique et d'autres matériaux à base de matières synthétiques, et le cadre (3) comprenant au moins deux parties de cadre (3a, 3b) qui sont reliées l'une à l'autre en des points de contact (6), les au moins deux parties de cadre (3a, 3b) comportant chacune aux points de contact (6) des moyens de liaison (7) qui se présentent sous forme de liaisons à languette et rainure dans le plan passant par les parties de cadre (3a et 3b),
**caractérisé en ce que**
un cadre (3) est moulé par injection au moins en deux parties de cadre (3a, 3b) dans un outil de moulage par injection commun,
les parties de cadre (3a, 3b) sont retirées,
et les parties de cadre (3a, 3b) sont portées à des températures différentes et les liaisons à languette et rainure moulées par injection sont engagées les unes avec les autres,
et lors du refroidissement les moyens de liaison (7) sont engagés les uns dans les autres en étant renforcés par contraction.

3. Procédé de fabrication d'une porte ou d'un volet de véhicule selon la revendication 1 ou 2,
**caractérisé en ce que**
un cadre (3) est fabriqué à partir d'un matériau expansé au moins en deux parties de cadre (3a, 3b) dans un outil de moulage par injection commun,
les parties de cadre (3a, 3b) sont retirées et assemblées,
le cadre est enveloppé de fibres de verre, de fibres de carbone ou d'autres fibres dans un processus sans fin à l'aide d'une machine d'enroulement et
le cadre (3) enveloppé de fibres est consolidé et/ou pénétré de matière synthétique et/ou de matériau composite pour obtenir la forme de cadre finale.

4. Procédé de fabrication d'une porte ou d'un volet (1) de véhicule destiné(e) à des véhicules automobiles selon la revendication 1 ou 2, la division des parties de cadre (3a, 3b) est telle que les parties de cadre (3a, 3b) sont fabriquées de manière imbriquée l'une dans l'autre dans un outil.

5. Procédé de fabrication d'une porte ou d'un volet (1) de véhicule destiné(e) à des véhicules automobiles selon la revendication 1 ou 2, les liaisons à languette et rainure pouvant être insérées les unes dans les autres dans une direction perpendiculaire au plan du cadre monté (3).

6. Procédé de fabrication d'une porte ou d'un volet (1) de véhicule destiné(e) à des véhicules automobiles selon la revendication 1 ou 2, les moyens de liaison comportant au moins une contre-dépouille (8).

7. Procédé de fabrication d'une porte ou d'un volet (1) de véhicule destiné(e) à des véhicules automobiles selon la revendication 1 ou 2, les moyens de liaison (7) étant équipés d'ergots (12, 13, 14) cylindriques ou coniques ou en forme de T et de réceptacles correspondants.
